# EUROPÄISCHE PATENTSCHRIFT

(11) **EP 1 870 761 B1**
(45) Veröffentlichungstag und Bekanntmachung des Hinweises auf die Patenterteilung: **23.03.2016**
(21) Anmeldenummer: 07009464.4
(22) Anmeldetag: 11.05.2007
(51) Int. Cl.: G02B 21/00

(54) **Rastermikroskop zur optischen Vermessung eines Objekts**
Scanning microscope for optical measurement of an object
Microscope à balayage destiné à la mesure optique d'un objet

(30) Priorität: 19.06.2006 DE 102006028409
(43) Veröffentlichungstag der Anmeldung: 26.12.2007
(73) Patentinhaber: Polytec GmbH, 76337 Waldbronn (DE)
(72) Erfinder: Rembe, Christian, Dr., 76337 Waldbronn (DE); Armbruster, Bernd, Dr., 76137 Karlsruhe (DE)
(74) Vertreter: Lemcke, Brommer & Partner Patentanwälte Partnerschaft mbB

(56) Entgegenhaltungen:
- WO-A-02/19594
- US-A- 5 674 743
- US-A1- 2005 122 579

## Beschreibung

Die Erfindung betrifft ein Rastermikroskop zur optischen Vermessung eines Objekts nach dem Oberbegriff des Patentanspruchs 1.

Ein solches Rastermikroskop umfasst ein Objektiv, eine Lichtquelle, eine Verschiebungseinheit und eine Scanner-Steuereinheit. Das Licht der Lichtquelle wird über den Strahlengang des Mikroskops, welcher typischerweise weitere Linsen, Strahlteiler und Umlenkspiegel aufweist, durch das Objektiv auf das zu vermessende Objekt als Messstrahl abgebildet. Der Messstrahl wird von dem Objekt reflektiert und tritt als Reflektionsstrahl durch das Objektiv wieder in den Strahlengang des Rastermikroskops ein. Im Rastermikroskop wird der Reflektionsstrahl typischerweise auf eine Bildbetrachtungseinheit abgebildet.

Die Bildbetrachtungseinheit ist im einfachsten Fall als Okular ausgeführt, durch welches ein Betrachter das Abbild des Messpunktes auf dem Objekt betrachten kann. Häufig ist die Bildbetrachtungseinheit jedoch als Kamera bzw. als Kamera mit einer angeschlossenen Auswerteeinheit ausgeführt, so dass ein Kamerabild abgespeichert werden kann.

Die Scanner-Steuereinheit ist mit der Verschiebeeinheit verbunden und sendet Steuersignale an diese, derart, dass die relative Lage von dem zu vermessenden Objekt und dem Messstrahl verändert werden kann.

Eine typische Verschiebeeinheit stellt ein X-Y-Tisch dar, der abhängig von den von der Scanner-Steuereinheit ausgesandten Signalen das Objekt im Wesentlichen senkrecht zu dem Messstrahl in X- oder der dazu senkrecht stehenden Y-Richtung verschieben kann. Hierdurch wird erreicht, dass der Messstrahl auf unterschiedliche, vorgegebene ortsverschiedene Messpunkte auf dem Objekt gerichtet werden kann, so dass unterschiedliche Messpunkte vermessen werden können.

Die Verschiebeeinheit kann jedoch ebenso im Strahlengang des Mikroskops angeordnet sein und derart auf den Messstrahl einwirken, dass dieser abgelenkt wird und dadurch auf ortsverschiedene, vorgegebene Messpunkte auf dem Objekt gerichtet werden kann. Eine Verschiebeeinheit kann beispielsweise durch steuerbare Drehspiegel im Strahlengang des Rastermikroskops realisiert werden.

Mit einem Rastermikroskop ist es somit möglich, in einem vorgegebenen Messvorgang mehrere ortsverschiedene Messpunkte auf dem Objekt mittels des Messstrahls zu beleuchten und das mittels des Reflektionsstrahls auf die Bildbetrachtungseinheit wie beispielsweise eine Kamera reflektierte Bild für jeden vermessenen Punkt abzuspeichern.

Der zu vermessende Messpunkt auf dem Objekt liegt bei den Messungen zweckmäßigerweise in etwa im Fokus des Mikroskops, damit der Messstrahl am Messpunkt eine möglichst geringe Ausdehnung aufweist und dadurch eine möglichst kleine Fläche auf dem Objekt beleuchtet wird, so dass eine hohe Ortsauflösung möglich ist.

Ein scannendes Fluoreszenzsiebensdauermikroskop Ist In der WO 02/19594 A2 beschrieben. Hierbei wird ein Laserstrahl über eine Mikroskopoptik auf eine Probe abgebildet, wobei die Probe auf einem steuerbaren Verschiebetisch angeordnet ist und somit relativ zu dem Laserstrahl verschoben werden kann. Eine in der Probe erzeugte Fluoreszenzstrahlung wird zumindest teilweise in den Strahlengang des Mikroskops eingekoppelt und mittels eines Detektors ausgelesen, wobei die Zeitverschiebung zwischen Anregung durch den Laser und Aussenden des Fluoreszenzlichtes abgespeichert wird.

In der US 5,674,743 wird eine Vorrichtung und eine Methode zur Sequenzierung von DNA beschrieben. Hierbei wird eine DNA-Probe mittels Strahlung angeregt und die von der Probe ausgehende Fluoreszenzstrahlung in den Strahlengang eines Mikroskops eingekoppelt und mittels eines Detektors und einer angeschlossenen Auswerteeinheit ausgewertet. Die Probe ist mittels eines Verschiebetisches relativ zum Mikroskop und relativ zur Anregungsstrahlung verschiebbar.

Die US 2005/0122579 A1 beschreibt ein scannendes, konfokales Mikroskop, bei dem der Lichtstrahl einer Lichtquelle über den Strahlengang eines Mikroskops auf eine Probe zur Erzeugung von Fluoreszenzstrahlung abgebildet wird. Die von der Probe erzeugte Fluoreszenzstrahlung wird In den Strahlengang des Mikroskops eingekoppelt und mittels eines Detektors ausgewertet, wobei nicht-fokale Strahlen ausgeblendet werden. Über eine Verschiebeeinheit kann die relative Lage zwischen Probe und Strahl der Strahlungsquelle verändert werden, sodass der Strahl auf verschiedene Ortspunkte auf der Probe gerichtet werden kann.

US 6,587,212 B1 beschreibt ein Verfahren zur Untersuchung der Schwingungsmoden eines elektro-akustischen Bauelementes mittels eines Michelsen-Interferometers, wobei das zu vermessende Objekt auf einem XY-Tisch angeordnet ist, so dass eine Raster-Scannung durchführbar ist.

US 2005/0280830 A1 beschreibt eine Vorrichtung zur optischen Vermessung eines Objekts, bei welcher der Messstrahl eines Interferometers in den Strahlengang eines konfokalen Autofokusmikroskops eingekoppelt wird.

US 6,606,159 B1 beschreibt ein interferometrisches, optisches Nahfeldmikroskop, bei welchem ein optischer Raumfilter mit einer Öffnung kleiner als die Wellenlänge eines Eingangsstrahls im Strahlengang angeordnet ist.

Der vorliegenden Erfindung liegt die Aufgabe zugrunde, ein Rastermikroskop der eingangs genannten Art dahingehend zu verbessern, dass auch Bewegungen des Objekts vermessen werden, insbesondere sowohl Bewegungen, welche im wesentlichen senkrecht zu dem Messstrahl verlaufen, als auch Bewegungen, welche im wesentlichen parallel zu dem Messstrahl verlaufen. Die Erweiterung im Funktionsumfang des Rastermikroskops soll dabei technisch unaufwendig und damit kostengünstig erfolgen.

Gelöst ist diese Aufgabe durch ein Rastermikroskop zur optischen Vermessung eines Objekts mit den Merkmalen des Patentanspruchs 1. Vorteilhafte Ausgestaltungen des erfindungsgemäßen Rastermikroskops finden sich in den Patentansprüchen 2 bis 9.

Die Erfindung unterscheidet sich von dem vorbekannten Stand der Technik also grundlegend dadurch, dass das Rastermikroskop ferner einen Signaldetektor und eine Signalspeichereinheit umfasst, wobei in der Signalspeichereinheit für jeden Messpunkt auf dem Objekt mehrere zeitlich hintereinander folgende Messsignale des Signaldetektors abgespeichert werden.

Der Signaldetektor ist im Strahlengang des Rastermikroskops angeordnet. Hierbei ist das Rastermikroskop derart ausgeführt, dass der Reflektionsstrahl, das heißt der von dem Objekt reflektierte Messstrahl, auf den Signaldetektor abgebildet wird.

Die Signalspeichereinheit ist mit dem Signaldetektor verbunden und derart ausgeführt, dass Messsignale des Signaldetektors durch die Signalspeichereinheit abgespeichert werden können. Die Signalspeichereinheit ist dabei derart ausgeführt, dass Messreihen von Signalen des Signaldetektors, das heißt, zeitlich hintereinander folgende Signale des Signaldetektors abgespeichert werden.

Die Scanner-Steuereinheit ist mit der Signalspeichereinheit verbunden, so dass diese von der Scanner-Steuereinheit gesteuert kann.

Die Steuerung durch die Scanner-Steuereinheit erfolgt derart, dass für jeden Messpunkt auf dem Objekt mindestens eine Messreihe der Messsignale des Signaldetektors abgespeichert wird. Eine Messreihe besteht dabei aus mindestens zwei Messsignalen des Signaldetektors. Die Signale können zeitlich unmittelbar aufeinander folgende Signale sein oder es kann zwischen den Signalen eine Messpause von einer vorgegebenen Zeitdauer liegen.

Die Messsignale werden mit einer vorgegebenen Abtastfrequenz abgespeichert, für eine vorgegebene Zeitdauer oder für eine vorgegebene Anzahl der abzuspeichernden Messsignale.

Das erfindungsgemäße Rastermikroskop zeichnet sich somit dadurch aus, dass der von dem sich bewegenden Objekt reflektierte Messstrahl von einem Signaldetektor detektiert wird, dessen Messsignale zeitaufgelöst für jeden Messpunkt auf dem Objekt durch die Signalspeichereinheit gespeichert werden.

Nachdem mit dem erfindungsgemäßen Rastermikroskop mehrere ortsverschiedene Messpunkte auf dem Objekt vermessen wurden, liegt somit für jeden dieser Messpunkte jeweils eine in der Signalspeichereinheit abgespeicherte Messreihe mit mehreren Messsignalen vor, aus der für jeden vermessenen Messpunkt auf dem Objekt Rückschlüsse auf die Bewegung dieses Punktes möglich sind.

Die Bewegung des Objekts kann dabei verschiedene Ursachen haben:
Typische zu vermessende Objekte aus der Mikrosystemtechnik besitzen einen Steuereingang, über den Steuersignale zur Anregung des Objekts empfangen werden können. Die Anregung erfolgt in diesem Fall durch eine externe Anregungseinheit, welche periodische Anregungssignale an das zu vermessende Objekt abgibt. Anstelle des Steuereingangs kann das Anregungssignal auch über andere Wege, z.B. Schall- oder Lichtimpulse von der Anregungseinheit auf das Objekt übertragen werden.

Ebenso kann die Anregung jedoch auch durch das Objekt selbst durch objektimmanente Anregungsmechanismen erfolgen. Typischerweise weisen solche Objekte einen Signalausgang auf, an dem ein mit der Anregung synchrones Synchronisationssignal (Triggersignal) abgegriffen werden kann. Ebenso ist es auch denkbar, das Triggersignal über eine Vermessung des Objekts, z.B. durch eine optische Vermessung eines definierten Punktes auf dem Objekt, zu erhalten.

Wesentlich ist, dass ein zu der Anregung des Objekts synchrones, periodisches Synchronisationssignal abgegriffen werden kann, sei es von einer Anregungseinheit oder von dem zu vermessenden Objekt selbst.

Die Scanner-Steuereinheit umfasst daher vorteilhafterweise einen Synchronisationseingang, in den das zur Anregung synchrone Synchronisationssignal eingespeist werden kann. Die Scanner-Steuereinheit ist derart ausgeführt, dass sie die Signalspeichereinheit abhängig von dem Synchronisationssignal steuert, derart, dass Anregung und Messdatenaufnahme synchronisiert werden.

Synchronisierung bedeutet hierbei, dass die von der Signaleinheit abgespeicherten Messreihen für jeden Messpunkt in etwa phasengleich zu dem Synchronisationssignal und damit zur Anregung des Objekts sind:
Wird beispielsweise für den ersten Messpunkt auf dem Objekts das erste Messsignal des Detektors für die erste Messreihe mit Beginn der Anregung des Objekts abgespeichert, so bewirkt die Synchronisierung, dass auch für den zweiten Messpunkt auf dem Objekt das erste Messsignal des Detektors für die zweite Messreihe mit Beginn der Anregung des Objekts durch die Anregungseinheit abgespeichert wird. Die Messdaten für das erste abgespeicherte Messsignal der ersten Messreihe und das erste abgespeicherte Messsignal der zweiten Messreihe sind somit phasengleich bezüglich der periodischen Anregung. Entsprechendes gilt für die übrigen Messpunkte und Messreihen.

Durch die synchronisierte Steuerung ist die Rekonstruktion der Bewegung des Objekts deutlich vereinfacht, da nun sichergestellt ist, dass die durch eine Messreihe gemessene Bewegung eines Punktes auf dem Objekt bezüglich der Anregung keine zeitliche Verschiebung, d.h. Phasenverschiebung zu den in den anderen Messreihen abgespeicherten Messungen der Bewegungen der anderen Punkte auf dem Objekt aufweist.

Vorteilhafterweise steuert die Scanner-Steuereinheit die Signalspeichereinheit derart, dass eine Messreihe mindestens die Messsignale des Signaldetektors während einer Anregungsperiode umfasst. Somit ist die Bewegung eines Messpunktes während eines vollen Anregungsspektrums in der Messreihe festgehalten. Sollte die periodische Anregung bei dem vermessenen Objekt zu einer periodischen Bewegung führen, welche eine in zeitlicher Hinsicht unterschiedlich lange periodische Bewegung verglichen mit der periodischen Anregung bewirkt, so ist es vorteilhaft, wenn die Messreihen derart gewählt werden, dass mindestens eine Periode der periodischen Bewegung des Messpunktes durch die abgespeicherten Messreihen festgehalten wird.

Die Zeitdauer, welche von einer Messreihe umfasst wird, ergibt sich aus der Anzahl der abgespeicherten Messsignale pro Messreihe und der zeitlichen Dichte, mit der die Messsignale des Signaldetektors abgespeichert werden.

Vorteilhafterweise werden die Messsignale in zeitlich äquidistanten Abständen abgespeichert, so dass eine Abtastfrequenz (sample rate) angegeben werden kann, mit der die Messsignale in einer Messreihe abgespeichert werden.

Die obige Bedingung, dass eine Messreihe mindestens eine Anregungs- oder Bewegungsperiode umfasst kann z.B. durch Vorgabe einer Abtastfrequenz und einer Zeitdauer, während der für eine Messreihe Messsignale abgespeichert werden, erreicht werden. Ebenso ist es denkbar, die Abtastfrequenz und eine Anzahl von abzuspeichernden Messsignalen vorzugeben.

Speziell für die Vermessung der Bewegungen von kleinen Objekten, insbesondere der Bewegungen oder Schwingungen von miniaturisierten Bauteilen in der Mikrosystemtechnik ist das vorhergehend beschriebene erfindungsgemäße Rastermikroskop geeignet, da der mittels des Mikroskops auf das Messobjekt fokussierte Messstrahl eine entsprechend kleine Fläche beim Auftreffen auf das Messobjekt aufweist, so dass örtlich hohe Auflösungen möglich sind.

Zur Vermessung der Bewegungen solcher Objekte ist die Abspeicherung von Messsignalen mit einer Abtastfrequenz von mindestens 1 kHz, insbesondere von mindestens 100 kHz vorteilhaft, um auch schnelle Bewegungen hinreichend genau auflösen zu können.

Zur Auswertung der in der Signalspeichereinheit gespeicherten Messdaten ist es vorteilhaft, wenn das Mikroskop ferner über eine Auswerteeinheit verfügt, welche mit der Signalspeichereinheit verbunden ist. Diese Auswerteeinheit ist derart ausgeführt, dass sie den Messsignalen abhängig vom Signalwert unterschiedliche Helligkeits- und/oder Farbwerte zuordnet. Auf diese Weise kann ein Bewegungsfilm des vermessenen Objekts dargestellt werden, indem auf einer flächigen Anzeige wie beispielsweise einem Bildschirm nacheinander zunächst alle ersten Messsignale der Messreihen flächig aufgelöst dargestellt werden, danach alle zweiten Messsignale usw.

Für eine Analyse der Bewegung des Objekts ist es vorteilhaft, wenn die Bewegung nicht nur durch einen Bewegungsfilm optisch dargestellt wird, sondern zusätzlich auch quantitative Information über die Bewegung des Objekts ermittelt wird. Dies kann durch Bestimmung der Bewegungsgeschwindigkeit und/oder Bewegungsrichtung eines Messpunktes des Objektes in der Messebene (In-Plane), d.h. senkrecht zu dem Messstrahl erreicht werden. Ebenso ist die Bestimmung der In-Plane-Bewegungsamplitude eines Messpunktes für die quantitative Auswertung der Bewegung von Nutzen.

Vorteilhafterweise ist die Auswerteeinheit daher derart ausgeführt, dass sie die Messreihen für die unterschiedlichen Messpunkte miteinander korreliert, derart, dass die Bewegungsgeschwindigkeit, die Bewegungsrichtung und/oder die Bewegungsamplitude aus den in der Signalspeichereinheit abgespeicherten Messreichen für mindestens einen Messpunkt ermittelt werden. Für die Ermittlung dieser quantitativen Information der Bewegung aus den Messdaten kann dabei auf bekannte Verfahren zur Analyse von In-Plane-Bewegungen zurückgegriffen werden, wie beispielsweise in T. Preußer, M. Rumpf, "Extracting Motion Velocities from 3D Image Sequences and Coupled Spatio-Temporal Smoothing", SPIE Conferences on Visualization and Data Analyses, SPIE Vol. 5009, 2003, p. 181-192 und L. Alvarez, J. Weickert, J. Sänchez, "A scale-space approach to nonlocal optical flow calculations", Scale-Space 1999, Corfu, Greece, Sept. 1999, Lecture Notes in Computer Science; 1682, pp. 235-246, Springer 1999, ausgeführt.

Eine Erhöhung der Messgenauigkeit kann dadurch erreicht werden, dass nicht-fokale Strahlen, welche von Punkten außerhalb des Fokus des Objektivs in das Objektiv einfallen, ausgeblendet werden. Das erfindungsgemäße Rastermikroskop ist daher vorteilhafterweise als konfokales Rastermikroskop ausgebildet, welches einen Raumfilter aufweist. Dieser Raumfilter ist im Strahlengang des Rastermikroskops angeordnet, derart, dass er die beschriebenen nicht-fokalen Strahlen im Wesentlichen ausblendet. Typischerweise wird das Ausblenden durch einen Raumfilter in Form einer Lochblende realisiert.

Mit dem vorhergehend beschriebenen Rastermikroskop können Bewegungen des Objekts, welche im Wesentlichen senkrecht zu dem Messstrahl stattfinden (In-Plane-Bewegungen) gemessen werden. Häufig finden jedoch dreidimensionale Bewegungen statt, das heißt, Bewegungen die nicht lediglich in einer Ebene liegen, sondern auch Bewegungsanteile senkrecht beispielsweise zur In-Plane-Ebene aufweisen. Solche Bewegungsanteile (Out-of-Plane Bewegungen), welche im Wesentlichen parallel zu dem Messstrahl stattfinden, können durch eine vorteilhafte Ausgestaltung des erfindungsgemäßen Rastermikroskops ebenfalls vermessen werden:
In dieser vorteilhaften Ausgestaltung weist das Rastermikroskop zusätzlich eine Fokussiereinrichtung auf, welche derart ausgeführt ist, dass sie den Abstand zwischen dem Objekt und der Fokusebene des Objektivs zueinander verändern kann.

Die Fokussiereinrichtung kann beispielsweise derart ausgeführt sein, dass sie durch Verschiebung der in dem Objektiv enthalten Linsen den Fokus des Objektivs ändert, dass sie das Objektiv relativ zu dem Objekt bewegt oder dass sie das Objekt selbst relativ zu dem Objektiv bewegt.

Wesentlich ist, dass mittels Steuersignalen an die Fokussiereinrichtung der Abstand zwischen dem Objekt und der Fokusebene des Objektivs vorgegeben werden kann.

Somit ist es möglich, dass die vorangehend beschriebenen Messungen in mehreren unterschiedlichen Ebenen nacheinander durchgeführt werden können:
Zunächst wird ein erster Abstand zwischen dem Objekt und der Fokusebene des Objektivs von der Scanner-Steuereinheit vorgegeben und anschließend eine scannende Messung der vorgegebenen Punkte auf dem Objekt in dieser Messebene durchgeführt. Für jeden Messpunkt wird eine wie vorangehend beschrieben ausgestaltete Messreihe von Messsignalen in der Signalspeichereinheit abgespeichert.

Anschließend steuert die Scanner-Steuereinheit die Fokussiereinrichtung derart, dass ein zweiter vorgegebener Abstand zwischen dem Objekt und der Fokusebene und damit eine zweite Messebene eingestellt wird. Für diesen zweiten Abstand werden nun ebenfalls Messungen wie vorhergehende beschrieben an den vorgegebenen Messpunkten durchgeführt.

Als Ergebnis erhält man somit für jeden vorgegebenen Messpunkt und für jede vorgegebene Messebene (das heißt für jeden vorgegebenen Abstand zwischen dem Objekt und der Fokussierebene des Objektivs) jeweils eine Messreihe von Messsignalen.

Zur Auswertung der Messdaten ist es auch in dieser Ausgestaltung des Rastermikroskops vorteilhaft, wenn das Rastermikroskop über eine Auswerteeinheit verfügt, welche die einzelnen Messreihen für die unterschiedlichen Messpunkte und Messebenen miteinander korreliert.

Durch eine Korrelation dieser Messdaten ist nicht nur eine Auswertung der In-Plane-Bewegungen möglich, sondern auch eine Auswertung der Out-of-Plane-Bewegungen, die im Wesentlichen senkrecht zu dem Messstrahl stattfinden. Die quantitative Auswertung der Bewegung, insbesondere von Bewegungsgeschwindigkeit, Bewegungsrichtung und Amplitude der Bewegung kann mittels an sich bekannter Korrelationsmethoden (z.B. Pattern-Matching Algorithmen) erfolgen, wie beispielsweise in T. Preußer, M. Rumpf (aaO) beschrieben.

Um eine einfache Auswertung der Bewegungsdaten zu erreichen, ist es vorteilhaft, wenn nicht nur die Daten der einzelnen Messpunkte einer Messebene synchronisiert aufgenommen werden, sondern wenn auch eine Synchronisation der Messungen für die verschiedenen Messebenen erfolgt. In diesem Fall stehen somit sämtliche gemessene Messreihen in einem festen Phasenverhältnis zu der periodischen Anregung.

Die beschriebene Rastermikroskop mit zusätzlicher Fokussiereinrichtung stellt eine einfache und kostengünstige Möglichkeit dar, dreidimensionale Bewegungen eines Objekts mittels eines Rastermikroskops zu vermessen.

Es liegt im Rahmen der Erfindung, die dreidimensionale Bewegung eines Messpunktes mittels eines Interferometers zu vermessen wobei das Rastermikroskop ein Interferometer aufweist, welches derart im Strahlengang des Rastermikroskops angeordnet ist, dass der von dem Interferometer ausgesandte Interferometer-Messstrahl über das Objektiv auf den Messpunkt auf dem Objekt abgebildet wird. Der vom Objekt reflektierte Interferometer-Messstrahl wird als Interferometer-Reflektionsstrahl wieder über das Objektiv und den Strahlengang des Mikroskops in das Interferometer abgebildet, so dass aufgrund der Interferenz der überlagerten Strahlen in bekannter Weise mittels eines Detektors die Bewegung des Messpunktes auf dem Objekt parallel zum Interferometer-Messstrahl durch eine Interferometer-Auswerteeinheit ermittelt werden kann.

Die Interferometer-Auswerteeinheit ist mit der Signalspeichereinheit verbunden, so dass für jeden Messpunkt auf dem Objekt zusätzlich zu der Messreihe der Messsignale des Signaldetektors die mittels der Interferometer-Auswerteeinheit ermittelten Bewegungsdaten der Out-of-Plane-Bewegung für diesen Messpunkt abgespeichert werden können.

In diesem erfindungsgemäßen Rastermikroskop muss somit lediglich ein Scann-Vorgang für die vorgegebenen Messpunkte auf dem Objekt durchgeführt werden, um die dreidimensionale Bewegung des Objekts zu vermessen. Weitere Durchgänge mit einer veränderten Messebene, wie bei der vorhergehend beschriebenen Rastermikroskop notwendig, können hier entfallen, so dass eine wesentlich schnellere Vermessung möglich ist.

Das Interferometer ist vorteilhafterweise als heterodynes Interferometer ausgeführt, bei dem zwei optische Wellen mit geringfügig unterschiedlicher Frequenz überlagert werden. Dies wird typischerweise dadurch erreicht, dass in das Interferometer ein akusto-optischer Modulator in den Strahlengang eingebracht wird, so dass die Frequenz einer optischen Welle verschoben werden kann.

Auf dem Interferometer-Detektor wird somit ein Signal mit der Differenzfrequenz der beiden optischen Wellen (der so genannten Heterodyn-frequenz) erzeugt, so dass in bekannter Weise aus den Signalen des Interferometer-Detektors nicht nur die Geschwindigkeit der Bewegung des zu vermessenden Messpunktes parallel zum Messstrahl, sondern auch die Richtung der Bewegung ermittelt werden kann.

Das auf dem Interferometer-Detektor erzeugte Signal kann auch als Messsignal für die Messreihen verwendet werden: Aus dem Signal des Interferometer-Detektors kann abhängig von der Trägerstärke des Signals auf die Lichtintensität des reflektierten Interferometer-Messstrahls rückgeschlossen werden. Die Berechnung der Lichtintensität aus dem Signal des Interferometers kann dabei mit an sich bekannten Methoden erfolgen, wie beispielsweise in C. Rembe, A. Dräbenstedt, "The Laser-Doppler Confocal Vibrometer Microscope", SPIE 5856, (2005), pp. 698-709 beschrieben.

Die so errechnete Lichtintensität kann als Messsignal für die Messreihen benutzt werden, so dass in diesem Fall der Interferometer-Detektor gleichzeitig als Signaldetektor benutzt werden kann. Die ermittelte Lichtintensität wird, wie oben angegeben, in Messreihen für jeden Messpunkt durch die Signalspeichereinheit abgespeichert.

In der vorangehend beschriebenen Ausführungsform wird somit sowohl die Bewegungsinformation, als auch die Information über die Lichtentensität aus dem Signal des Interferometers gewonnen. Daraus ergeben sich weitere Vorteile:
Einerseits dient das Interferometer sowohl als Detektor, als auch als Lichtquelle, da der von dem Interferometer erzeugte Interferometer-Messstrahl zur Ermittlung sämtlicher Messdaten mittels der Signale des Interferometer-Detektors benutzt wird. Das Rastermikroksop ist somit apparativ einfach zu gestalten, da lediglich ein Interferometer verwendet wird, jedoch dessen Messsignale in mehrfacher Hinsicht ausgewertet werden.

Darüber hinaus wird das Intensitätssignal aus dem Interferometer-Messsignal gewonnen, so dass der Intensitätsbestimmung eine Interferenz der im Interferometer überlagerten Strahlen zugrunde liegt. Dadurch ist eine höhere Messgenauigkeit und größere Robustheit bei der Bestimmung des Intensitätssignals möglich.

Im Folgenden werden Ausführungsbeispiele der Erfindung anhand der beigefügten Zeichnungen näher beschrieben und erläutert. Dabei zeigen:
- Figur 1: eine schematische Darstellung eines Rastermikroskops, welches eine Fokussiereinrichtung umfasst und
- Figur 2: eine schematische Darstellung eines erfindungsgemäßen Rastermikroskops, welches eine Fokussiereinrichtung und ein Interferometer umfasst.

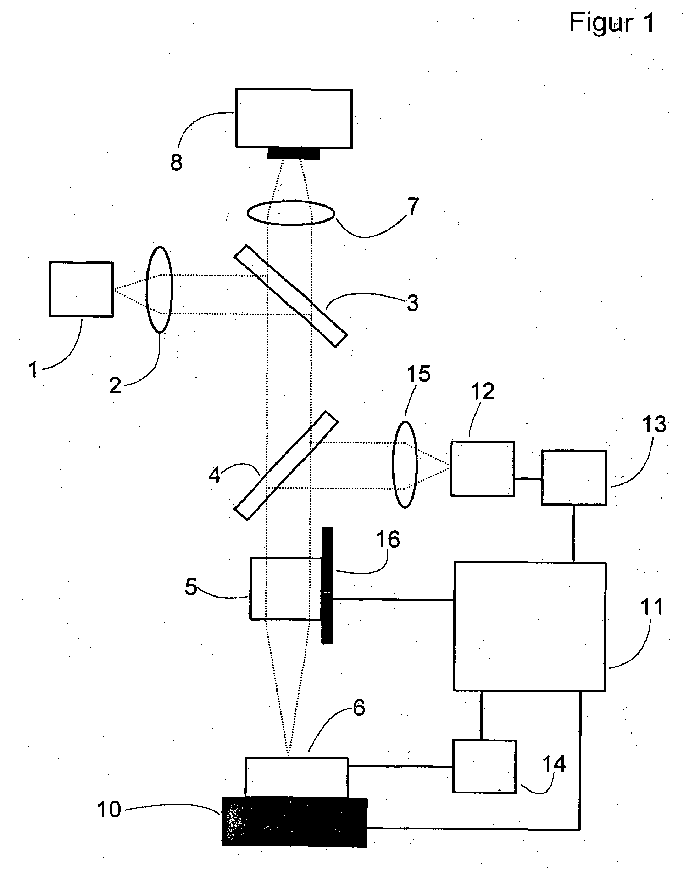

Das in Figur 1 dargestellte Rastermikroskop umfasst eine Lichtquelle 1 deren Lichtstrahl über eine erste Linse 2, einen ersten Strahlteiler 3, einen zweiten Strahlteiler 4 und ein Objektiv 5 auf ein zu vermessendes Objekt 6 abgebildet wird. Der von dem Objekt 6 reflektierte Lichtstrahl der Lichtquelle 1 wird als Reflektionsstrahl durch das Objektiv 5, den zweiten Strahlteiler 4, den ersten Strahlteiler 3 und die zweite Linse 7 auf eine als Kamera 8 ausgeführte Bildbetrachtungseinheit abgebildet.

Das Objekt 6 ist auf einer Verschiebeeinheit 10 gelagert, welche mit einer Scanner-Steuereinheit 11 verbunden ist. Die Verschiebeeinheit 10 ist als X-Y-Tisch ausgeführt, so dass das Objekt 6 im Wesentlichen senkrecht zu dem Messstrahl in beide Richtungen, das heißt, in der Darstellung in Figur 1 nach rechts und links und aus der Bildebene heraus und in diese hinein verschoben werden kann.

Ebenso ist es auch denkbar, an Stelle des X-Y-Tisches die Verschiebeeinheit als Anordnung von Scannerspiegeln auszugestalten, welche derart im Strahlengang des Mikroskops angeordnet sind, dass der Messstrahl auf mehrere vorgegebene ortsverschiedene Messpunkte auf dem Objekt gerichtet werden kann.

Die Verschiebeeinheit 10 wird durch die Scanner-Steuereinheit 11 gesteuert.

Wesentlich ist nun, dass das Rastermikroskop ferner über einen Signaldetektor 12, eine Signalspeichereinheit 13 und eine Anregungseinheit 14 verfügt. Der vom Objekt reflektierte Messstrahl wird als Reflektionsstrahl, nachdem er das Objektiv 5 durchlaufen hat, durch den zweiten Strahlteiler 4 über eine dritte Linse 15 auf den Signaldetektor 12 abgebildet. Der Signaldetektor misst die Lichtintensität des Messstrahls und gibt entsprechende Signale an die Signalspeichereinheit 13 weiter.

Die Scanner-Steuereinheit 11 ist mit der Signalspeichereinheit 13 und der Anregungseinheit 14 verbunden. Die Anregungseinheit 14 wiederum ist mit dem Objekt 6 verbunden, so dass dieses durch die Anregungseinheit 14 periodisch angeregt werden kann.

Die Scanner-Steuereinheit 11 steuert die Verschiebeeinheit 10 und die Signalspeichereinheit 13 abhängig von den von der Anregungseinheit 14 erhaltenen Synchronisationssignalen derart, dass für jeden vorgegebenen Messpunkt in der Signalspeichereinheit eine Messreihe mit einer vorgegebenen Anzahl von Messpunkten abgespeichert wird. Die Messpunkte werden dabei mit einer vorgegebenen Abtastfrequenz aufgenommen.

Anschließend steuert die Scanner-Steuereinheit die Verschiebeeinheit 10 derart, dass der nächste Messpunkt auf dem Objekt 6 durch den Messstrahl beaufschlagt wird. Für diesen Messpunkt wird dann in gleicher Weise eine Messreihe aufgenommen und in der Signalspeichereinheit 13 abgespeichert.

Die Scanner-Steuereinheit 11 synchronisiert bei der Messung die Signalspeichereinheit 13 abhängig von den von der Anregungseinheit 14 erhaltenen Synchronisationssignalen, so dass jede Messreihe in einem gleichen Phasenverhältnis zur Anregungsperiode der Anregungseinheit 14 steht.

In die Scanner-Steuereinheit 11 ist ferner eine (nicht dargestellte) Auswerteeinheit integriert, welche nach erfolgter Vermessung aller vorgegebener Messpunkte auf dem Objekt eine Auswertung der in der Signalspeichereinheit 13 abgespeicherten Messdaten ausführt, derart, dass ein Bewegungsfilm der In-Plane-Bewegungen des Messobjekts 6 erzeugt wird.

Das in Figur 1 dargestellte Rastermikroskop weist ferner eine Fokussiereinrichtung 16 auf, welche ebenfalls mit der Scanner-Steuereinheit 11 verbunden ist. Hierdurch ist es möglich, den oben beschriebenen Messvorgang für verschiedene Messebenen, das heißt für verschiedene Abstände von Messobjekt und Fokusebene des Objektivs durchzuführen. Für jede vorgegebene Messebene regelt die Scannersteuereinheit 11 die Fokussiereinrichtung derart, dass das Objektiv 5 in den gewünschten Abstand zum Messobjekt 6, das heißt in Figur 1 entsprechend nach oben oder nach unten verfahren wird. Anschließend wird für jeden Messpunkt auf dem Objekt 6 jeweils eine Messreihe aufgenommen.

Vorteilhafterweise ist das in Figur 1 dargestellte Rastermikroskop als konfokales Rastermikroskop ausgebildet, d.h. es weist eine (nicht dargestellte) Lochblende im Strahlengang des Mikroskops auf, welche nicht-fokale Strahlen ausblendet, so dass nur Strahlen, die aus dem Fokusbereich des Objektivs in den Strahlengang des Mikroskops einfallen zur Messung beitragen.

Nach Abschluss der Messungen können aus den Daten für die einzelnen Messpunkte und die einzelnen Messebenen die dreidimensionalen Bewegungen der Messpunkte rekonstruiert werden und mittels Pattern-Matching-Algorithmen können quantitative Informationen wie Bewegungsgeschwindigkeit, Bewegungsrichtung und Amplitude der Bewegung für die einzelnen Messpunkte ermittelt werden.

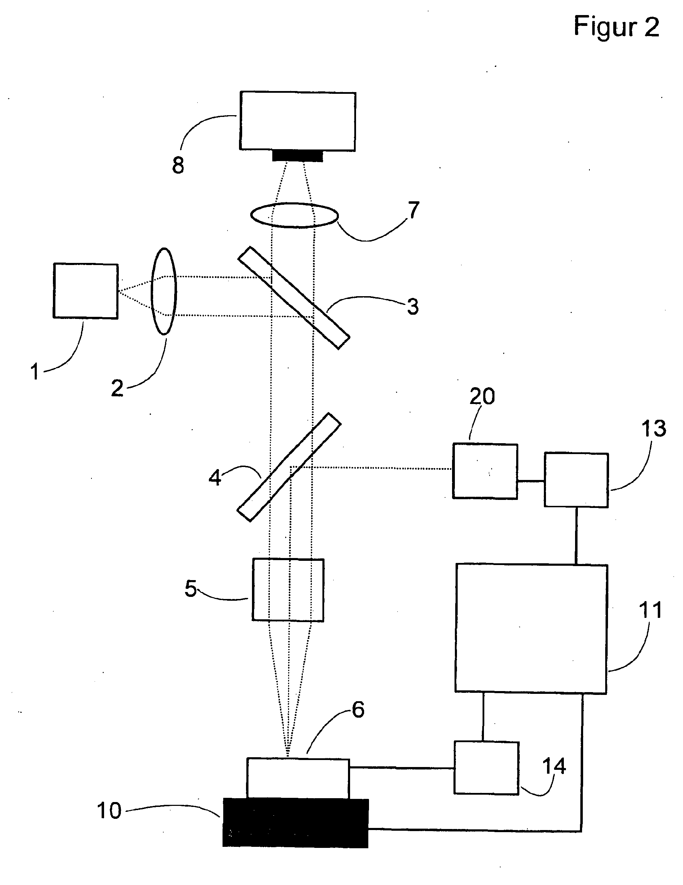

In Figur 2 ist ein weiteres Ausführungsbeispiel des erfindungsgemäßen Rastermikroskops dargestellt, welches die bereits in Figur 1 beschriebenen Elemente Lichtquelle 1, erste Linse 2, erster Strahlteiler 3, zweiter Strahlteiler 4, Objektiv 5, Verschiebeeinheit 10, zweite Linse 7, Kamera 8, Scannersteuereinheit 11, Fokussiereinrichtung 16, sowie Anregungseinheit 14 aufweist.

Im Gegensatz zu dem in Figur 1 beschriebenen Ausführungsbeispiel weist das in Figur 2 dargestellte Rastermikroskop ein heterodynes Interferometer 20 auf, welches mit der Signalspeichereinheit 13 verbunden ist. Das heterodyne Interferometer 20 sendet einen Interferometer-Messstrahl aus, welcher über den zweiten Strahlteiler 4 durch das Objektiv 5 auf das Messobjekt 6 trifft und der reflektierte Interferometer-Messstrahl tritt als Interferometer-Reflektionsstrahl durch das Mikroskop 5 wieder in den Strahlengang des Rastermikroskops ein und wird über den zweiten Strahlteiler 4 auf das Interferometer 20 abgebildet. In dem Interferometer 20 werden die beiden Strahlen (Messstrahl und Reflektionsstrahl) auf einem Interferometer-Detektor überlagert. Das Interferometer 20 umfasst eine (nicht dargestellte) Interferometer-Auswerteeinheit, welche mit der Signal-Speichereinheit 13 verbunden ist und zweierlei Daten an diese sendet:
Zum einen wertet die Interferometer-Auswerteeinheit die Daten des Interferometer-Detektors dahingehend aus, dass die Out-of-Plane-Bewegung des Messpunktes des Objekts 6 hinsichtlich Geschwindigkeit und Richtung bestimmt wird und diese Daten an die Signalspeichereinheit 13 weitergegeben werden. Weiterhin wertet die Interferometer-Auswerteeinheit die Daten des Interferometers dahingehend aus, dass sie die Trägerstärke des Messsignals an die Signalspeichereinheit 13 weiterleitet. Die Trägerstärke des Messsignals ist ein Maß für die Intensität des von dem Messpunkt auf dem Objekt 6 reflektierten Interferometer-Reflektionsstrahls.

Die Interferometer-Auswerteeinheit weist zur Auswertung der Messdaten des Interferometer-Detektors eine mehrkanalige Signalauswerteeinheit auf, welche parallel das Signal zur Bestimmung der Out-of-Plane Bewegung und das Signal zur Bestimmung der Lichtintensität verarbeitet. Auf diese Weise ist eine einfache Synchronisation der beiden Informationen möglich, da beide Daten zeitgleich erfasst werden.

In der Signalspeichereinheit 13 können somit für jeden Messpunkt sowohl die genannten Daten für die Out-of-Plane-Bewegung als auch die Intensitätsdaten zeitaufgelöst in einer Messreihe zur Bestimmung der In-Plane-Bewegung abgespeichert werden.

Der Messvorgang wird wie bereits in der Beschreibung zur Figur 1 ausgeführt, durch die Scannersteuereinheit 11 gesteuert.

Für die Vermessung der dreidimensionalen Bewegung ist mit dem in Figur 2 dargestellten Rastermikroskop somit lediglich ein einmaliger Scanvorgang der vorgegebenen Messpunkte notwendig, wohingegen bei dem in Figur 1 dargestellten Rastermikropskop für jede Messebene ein Scanvorgang für die vorgegebenen Messpunkte notwendig ist.

Die Fokussiereinrichtung 16 dient daher bei dem in Figur 2 dargestellten Rastermikroskop nicht dazu, mehrere Messebenen einzustellen. Ihre Funktion besteht darin, den Fokus mit der Oberfläche des zu vermessenden Objekts abzugleichen. Das in Figur 2 dargestellte Rastermikroskop ist daher als konfokales Autofokusmikroskop ausgeführt, das eine (nicht dargestellte) Lochblende im Strahlengang des Mikroskops aufweist, welche nicht fokale Strahlen ausblendet..

Hierzu kann die in Figur 2 dargestellte Scanner-Steuereinheit 11 ein an sich bekanntes Autofokussystem aufweisen, welches die Fokussiereinrichtung 16 derart regelt, dass der Fokus des Objektivs 5 für jeden Messpunkt auf der Oberfläche des zu vermessenden Objekts liegt. Ein solches Autofokussystem ist beispielsweise in EP 1 610 088 beschrieben.

Bei dem in Figur 2 dargestellten Rastermikroskop dient das Interferometer für den Messvorgang somit insofern als Lichtquelle, dass der Laserstrahl des Interferometers als Messstrahl zur Bestimmung der Lichtintensität dient. Die Lichtquelle 1 und die Kamera 8 mit den dazugehörigen optischen Komponenten erste Linse 2, erster Strahlteiler 3 und zweite Linse 7 sind somit für den eigentlichen Messvorgang nicht notwendig und können an sich auch weggelassen werden. Es ist jedoch vorteilhaft, wenn der Benutzer über diese Komponenten ein optisches Bild des zu vermessenden Objekts 6 mittels der Kamera 8 erhält, so dass er Beispielsweise die Positionierung der Messpunkte auf dem Objekt überprüfen kann.

## Patentansprüche

1. Rastermikroskop zur optischen Vermessung eines Objekts,
umfassend ein Objektiv (5), eine Lichtquelle (1), und eine Scanner-Steuereinheit (11),
wobei das Rastermikroskop derart ausgeführt ist,
dass ein von der Lichtquelle (1) ausgesandter Messstrahl auf das zu vermessende Objekt (6) trifft und der von dem Objekt (6) reflektierte Messstrahl als Reflektionsstrahl durch das Objektiv (5) in den Strahlengang des Mikroskops eintritt
wobei das Rastermikroskop ferner einen Signaldetektor (12) und eine Signalspeichereinheit (13) umfasst, wobei
der Signaldetektor (12) derart im Strahlengang des Rastermikroskops angeordnet ist, dass der Reflektionsstrahl auf den Signaldetektor (12) abgebildet wird und
die Signalspeichereinheit (13) mit dem Signaldetektor (12) verbunden ist, für eine Abspeicherung einer Messreihe von Signalen des Signaldetektors,
wobei das Rastermikroskop eine Auswerteeinheit umfasst, welche mit der Signalspeichereinheit (13) verbunden ist, zum Ermitteln einer Geschwindigkeit und/oder einer Amplitude einer In-Plane-Bewegung aus den Messreihen für mindestens einen Messpunkt mittels der Auswerteeinheit und
wobei das Rastermikroskop ein Interferometer umfasst, welches derart im Strahlengang des Rastermikroskops angeordnet ist, dass der von dem Interferometer ausgesandte Interferometer-Messstrahl über das Objektiv (5) auf den Messpunkt auf dem Objekt (6) abgebildet wird und der vom Objekt (6) reflektierte Interferometer-Messtrahl als Interferometer-Reflektionsstrahl wieder über das Objektiv (5) und den Strahlengang des Mikroskops in das Interferometer abgebildet wird, wobei das Interferometer eine Interferometer-Auswerteeinheit umfasst, für die Ermittlung der Bewegung des Objekts parallel zum Interferometermessstrahl aus den interferometrischen Messdaten,
**dadurch gekennzeichnet,**
**dass** das Rastermikroskop eine Verschiebeeinheit (10) umfasst und die Scanner-Steuereinheit (11) mit der Verschiebeeinheit (10) derart zusammenwirkend ausgeführt ist, dass die Scanner-Steuereinheit (11) die Verschiebeeinheit (10) mittels Steuersignalen derart steuert, dass die relative Lage von dem zu vermessenden Objekt (6) und dem Messstrahl verändert wird, so dass der Messstrahl auf mindestens zwei vorgegebene, ortsverschiedene Messpunkte auf dem Objekt (6) gerichtet werden kann,
**dass** die Scanner-Steuereinheit (11) mit der Signalspeichereinheit (13) verbunden ist, zur Steuerung der Signalspeichereinheit (13) für die Abspeicherung mindestens einer Messreihe für jeden Messpunkt auf dem Objekt (6) mit mindestens zwei zeitlich hintereinander folgenden Messsignalen des Signaldetektors mit einer vorgegebenen Abtastfrequenz von mindestens 1 KHz und für eine vorgegebene Zeitdauer oder für eine vorgegebene Anzahl von abzuspeichernden Messsignalen,
**dass** die Interferometerauswerteeinheit mit der Signalspeichereinheit verbunden ist, für die Abspeicherung der mittels der Interferometerauswerteeinheit ermittelten Bewegungsdaten zusätzlich zu der Messreihe der Messsignale des Signaldetektors für jeden Messpunkt auf dem Objekt (6) und
**dass** das Interferometer der Signaldetektor (12) ist, wobei aus der Trägerstärke des Interferometer-Messsignals das Messsignal für die In-plane Bewegung gewonnen wird.

2. Rastermikroskop nach Anspruch 1,
**dadurch gekennzeichnet,**
**dass** die Scanner-Steuereinheit (11) einen Synchronisationseingang umfasst und derart ausgeführt ist, dass sie die Signalspeichereinheit (13) abhängig von einem am Synchronisationseingang anliegenden Synchronisationssignal steuert, derart, dass die von der Signaleinheit abgespeicherten Messreihen für jeden Messpunkt in etwa phasengleich zu dem Synchronisationssignal sind.

3. Rastermikroskop nach einem der vorangegangenen Ansprüche,
**dadurch gekennzeichnet,**
**dass** die Scanner-Steuereinheit (11) derart zusammenwirkend mit der Signalspeichereinheit (13) ausgeführt ist,
**dass** jede für einen Messpunkt abgespeicherte Messreihe mindestens eine vorgegebene Anzahl von Messsignalen des Signaldetektors umfasst.

4. Rastermikroskop nach einem der vorangegangenen Ansprüche
**dadurch gekennzeichnet,**
**dass** der Signaldetektor (12) und die Signalspeichereinheit (13) derart ausgeführt sind, dass Messsignale mit einer Abtastfrequenz von mindestens 100 kHz abgespeichert werden.

5. Rastermikroskop nach einem der vorangegangenen Ansprüche,
**dadurch gekennzeichnet,**
**dass** das Mikroskop eine Auswerteeinheit umfasst, welche mit der Signalspeichereinheit (13) verbunden und derart ausgeführt ist, dass sie die einzelnen Messreihen für die unterschiedlichen Messpunkte miteinander korreliert, derart, dass für mindestens einen Messpunkt eine Geschwindigkeit und/oder eine Amplitude einer Bewegung dieses Messpunktes ermittelt wird.

6. Rastermikroskop nach einem der vorangegangenen Ansprüche,
**dadurch gekennzeichnet,**
**dass** das Rastermikroskop als konfokales Rastermikroskop ausgebildet ist,
mit einem Raumfilter, welcher derart im Strahlengang des Rastermikroskops angeordnet ist, dass er nicht-fokale Strahlen, welche von Punkten außerhalb des Fokus des Objektivs in das Objektiv (5) einfallen, im Wesentlichen ausblendet.

7. Rastermikroskop nach einem der vorangegangenen Ansprüche,
**dadurch gekennzeichnet,**
**dass** das Rastermikroskop zusätzlich eine Fokussiereinrichtung aufweist, welche derart ausgeführt ist, dass sie den Abstand zwischen dem Objekt (6) und der Fokusebene des Objektivs zueinander verändern kann,
wobei die Fokussiereinrichtung mit der Scanner-Steuereinheit (11) verbunden ist und die Scanner-Steuereinheit (11) die Fokussiereinrichtung, die Verschiebeeinheit (10) und die Signalspeichereinheit (13) derart steuert, dass für jeden Messpunkt jeweils für mindestens zwei vorgegebene Abstände zwischen Objekt (6) und der Fokusebene eine Messreihe der Messsignale des Signaldetektors abgespeichert wird.

8. Rastermikroskop nach den Ansprüchen 5 und 7,
**dadurch gekennzeichnet,**
**dass** die Auswerteeinheit derart ausgeführt ist, dass sie die einzelnen Messreihen für die unterschiedlichen Messpunkte und für jeden Abstand zwischen Objekt (6) und der Fokusebene des Objektivs miteinander korreliert, derart, dass für mindestens einen Messpunkt eine Geschwindigkeit und/oder eine Amplitude einer Bewegung dieses Messpunktes ermittelt wird.

9. Rastermikroskop nach einem der vorangegangenen Ansprüche,
**dadurch gekennzeichnet,**
**dass** das Interferometer als heterodynes Interferometer (20) ausgeführt ist, bei dem zwei optische Wellen mit unterschiedlicher Frequenz überlagert werden.

## Claims

1. Scanning microscope for optical measurement of an object,
comprising an objective (5), a light source (1) and a scanner control unit (11),
wherein the scanning microscope is configured in such a way that a measuring beam emitted by the light source (1) strikes the object (6) being measured and the measuring beam reflected by the object (6) passes in the form of a reflected beam through the objective (5) into the beam path of the microscope,
wherein the scanning microscope further comprises a signal detector (12) and a signal storage unit (13),
the signal detector (12) being arranged in the beam path of the scanning microscope in such a way that the reflected beam is imaged onto the signal detector (12) and
the signal storage unit (13) being connected to the signal detector (12) for storage of a measurement series of signals of the signal detector,
wherein the scanning microscope comprises an analysis unit, which is connected to the signal storage unit (13), for determining a speed and/or an amplitude of an in-plane movement from the measurement series for at least one measuring point by means of the analysis unit and
wherein the scanning microscope comprises an interferometer which is arranged in the beam path of the scanning microscope in such a way that the interferometer measuring beam emitted by the interferometer is imaged *via* the objective (5) onto the measuring point on the object (6) and the interferometer measuring beam reflected by the object (6), in the form of an interferometer reflected beam, is imaged again *via* the objective (5) and the beam path of the microscope into the interferometer, the interferometer comprising an interferometer analysis unit for determination of the movement of the object parallel to the interferometer measuring beam from the interferometric measurement data,
**characterised in that**
the scanning microscope comprises a displacement unit (10) and the scanner control unit (11) is configured to co-operate with the displacement unit (10) in such a way that the scanner control unit (11) controls the displacement unit (10) by means of control signals in such a way that the relative position between the object (6) being measured and the measuring beam is altered so that the measuring beam can be directed onto at least two preset, differently located measuring points on the object (6),
the scanner control unit (11) is connected to the signal storage unit (13) to control the signal storage unit (13) for the storage of at least one measurement series for each measuring point on the object (6) having at least two chronologically successive measuring signals of the signal detector with a preset sampling frequency of at least 1 kHz and for a preset duration or for a preset number of measuring signals to be stored,
the interferometer analysis unit is connected to the signal storage unit for storage of the movement data determined by means of the interferometer analysis unit in addition to the measurement series of the measuring signals of the signal detector for each measuring point on the object (6) and
the interferometer is the signal detector (12), the measuring signal for the in-plane movement being obtained from the carrier strength of the interferometer measuring signal.

2. Scanning microscope according to claim 1,
**characterised in that**
the scanner control unit (11) comprises a synchronisation input and is configured in such a way that it controls the signal storage unit (13), in dependence upon a synchronisation signal applied to the synchronisation input, in such a way that the measurement series stored by the signal unit for each measuring point are approximately in phase with the synchronisation signal.

3. Scanning microscope according to either one of the preceding claims,
**characterised in that**
the scanner control unit (11) is configured to co-operate with the signal storage unit (13) in such a way that
each measurement series stored for a measuring point comprises at least a preset number of measuring signals of the signal detector.

4. Scanning microscope according to any one of the preceding claims,
**characterised in that**
the signal detector (12) and the signal storage unit (13) are configured in such a way that measuring signals are stored with a sampling frequency of at least 100 kHz.

5. Scanning microscope according to any one of the preceding claims,
**characterised in that**
the microscope comprises an analysis unit which is connected to the signal storage unit (13) and is configured in such a way that it correlates the individual measurement series for the different measuring points with one another in such a way that, for at least one measuring point, a speed and/or an amplitude of a movement of that measuring point is determined.

6. Scanning microscope according to any one of the preceding claims,
**characterised in that**
the scanning microscope is in the form of a confocal scanning microscope,
having a spatial filter which is arranged in the beam path of the scanning microscope in such a way that it substantially blocks out non-focal beams which enter the objective (5) from points outside the focus of the objective.

7. Scanning microscope according to any one of the preceding claims,
**characterised in that**
the scanning microscope additionally has a focussing device which is configured in such a way that it is able to alter the distance between the object (6) and the focal plane of the objective,
wherein the focussing device is connected to the scanner control unit (11), and the scanner control unit (11) controls the focussing device, the displacement unit (10) and the signal storage unit (13) in such a way that, for each measuring point, a measurement series of the measuring signals of the signal detector is stored for at least two preset distances between the object (6) and the focal plane.

8. Scanning microscope according to claims 5 and 7,
**characterised in that**
the analysis unit is configured in such a way that it correlates with one another the individual measurement series for the different measuring points and for each distance between the object (6) and the focal plane of the objective in such a way that, for at least one measuring point, a speed and/or an amplitude of a movement of that measuring point is determined.

9. Scanning microscope according to any one of the preceding claims,
**characterised in that**
the interferometer is configured as a heterodyne interferometer (20) in which two optical waves of different frequency are superimposed.

## Revendications

1. Microscope à balayage destiné à la mesure optique d'un objet,
comprenant un objectif (5), une source de lumière (1) et une unité de commande de scanner (11),
lequel microscope à balayage est réalisé de façon
qu'un faisceau de mesure émis par la source de lumière (1) rencontre l'objet à mesurer (6) et que le faisceau de mesure réfléchi par l'objet (6) entre dans le chemin optique du microscope à travers l'objectif (5) en tant que faisceau de réflexion,
lequel microscope à balayage comprend en outre un détecteur de signaux (12) et une unité de stockage de signaux (13),
le détecteur de signaux (12) étant disposé dans le chemin optique du microscope à balayage de façon que le faisceau de réflexion soit reproduit sur le détecteur de signaux (12) et
l'unité de stockage de signaux (13) étant reliée au détecteur de signaux (12) pour une mémorisation d'une série de mesures de signaux du détecteur de signaux, lequel microscope à balayage comprend une unité d'évaluation qui est reliée à l'unité de stockage de signaux (13) pour la détermination d'une vitesse et/ou d'une amplitude d'un déplacement dans le plan à partir des séries de mesures pour au moins un point de mesure au moyen de l'unité d'évaluation et
lequel microscope à balayage comprend un interféromètre qui est disposé dans le chemin optique du microscope à balayage de façon que le faisceau de mesure d'interféromètre émis par l'interféromètre soit reproduit par l'objectif (5) sur le point de mesure sur l'objet (6) et que le faisceau de mesure d'interféromètre réfléchi par l'objet (6) soit de nouveau reproduit dans l'interféromètre par l'objectif (5) et le chemin optique du microscope en tant que faisceau de réflexion d'interféromètre, l'interféromètre comprenant une unité d'évaluation d'interféromètre pour la détermination du déplacement de l'objet parallèlement au faisceau de mesure d'interféromètre à partir des données de mesure interférométriques,
**caractérisé en ce**
**que** le microscope à balayage comprend une unité de déplacement (10) et l'unité de commande de scanner (11) est réalisée de manière à coopérer avec l'unité de déplacement (10) de façon que l'unité de commande de scanner (11) commande l'unité de déplacement (10) au moyen de signaux de commande de manière à modifier la position relative de l'objet à mesurer (6) et du faisceau de mesure, afin que le faisceau de mesure puisse être dirigé sur au moins deux points de mesure prédéfinis différents sur l'objet (6),
**que** l'unité de commande de scanner (11) est reliée à l'unité de stockage de signaux (13) pour commander l'unité de stockage de signaux (13) pour la mémorisation d'au moins une série de mesures pour chaque point de mesure sur l'objet (6) avec au moins deux signaux de mesure successifs dans le temps du détecteur de signaux à une fréquence d'échantillonnage prédéfinie d'au moins 1 kHz et pendant une durée prédéfinie ou pour un nombre prédéfini de signaux de mesure à mémoriser,
**que** l'unité d'évaluation d'interféromètre est reliée à l'unité de stockage de signaux pour la mémorisation des données de déplacement déterminées au moyen de l'unité d'évaluation d'interféromètre en plus de la série de mesures des signaux de mesure du détecteur de signaux pour chaque point de mesure sur l'objet (6) et que l'interféromètre est le détecteur de signaux (12), le signal de mesure pour le déplacement dans le plan étant obtenu à partir de la puissance de la porteuse du signal de mesure de l'interféromètre.

2. Microscope à balayage selon la revendication 1,
**caractérisé en ce**
**que** l'unité de commande de scanner (11) comprend une entrée de synchronisation et est réalisée de façon qu'elle commande l'unité de stockage de signaux (13) en fonction d'un signal de synchronisation appliqué à l'entrée de synchronisation, de façon que les séries de mesures mémorisées par l'unité de stockage de signaux pour chaque point de mesure soient approximativement en phase avec le signal de synchronisation.

3. Microscope à balayage selon l'une des revendications précédentes,
**caractérisé en ce**
**que** l'unité de commande de scanner (11) est réalisée de manière à coopérer avec l'unité de stockage de signaux (13) de façon que chaque série de mesures mémorisée pour un point de mesure comprenne un nombre prédéfini de signaux de mesure du détecteur de signaux.

4. Microscope à balayage selon l'une des revendications précédentes,
**caractérisé en ce**
**que** le détecteur de signaux (12) et l'unité de stockage de signaux (13) sont réalisés de façon que des signaux de mesure soient mémorisés à une fréquence d'échantillonnage d'au moins 100 kHz.

5. Microscope à balayage selon l'une des revendications précédentes,
**caractérisé en ce**
**que** le microscope comprend une unité d'évaluation qui est reliée à l'unité de stockage de signaux (13) et réalisée de façon qu'elle corrèle entre elles les différentes séries de mesures pour les différents points de mesure, de façon à déterminer, pour au moins un point de mesure, une vitesse et/ou une amplitude d'un déplacement de ce point de mesure.

6. Microscope à balayage selon l'une des revendications précédentes,
**caractérisé en ce**
**que** le microscope à balayage est réalisé sous la forme d'un microscope à balayage confocal,
avec un filtre spatial qui est disposé dans le chemin optique du microscope à balayage de telle façon qu'il supprime sensiblement les rayons non focaux qui entrent dans l'objectif (5) depuis des points situés en dehors du foyer de l'objectif.

7. Microscope à balayage selon l'une des revendications précédentes,
**caractérisé en ce**
**que** le microscope à balayage présente en outre un dispositif de focalisation qui est réalisé de façon à pouvoir modifier la distance entre l'objet (6) et le plan focal de l'objectif,
le dispositif de focalisation étant relié à l'unité de commande de scanner (11) et l'unité de commande de scanner (11) commandant le dispositif de focalisation, l'unité de déplacement (10) et l'unité de stockage de signaux (13) de façon qu'une série de mesures des signaux de mesure du détecteur de signaux soit mémorisée pour chaque point de mesure, chaque fois pour au moins deux distances prédéfinies entre l'objet (6) et le plan focal.

8. Microscope à balayage selon les revendications 5 et 7,
**caractérisé en ce**
**que** l'unité d'évaluation est réalisée de façon qu'elle corrèle entre elles les différentes séries de mesures pour les différents points de mesure et pour chaque distance entre l'objet (6) et le plan focal de l'objectif, de façon à déterminer, pour au moins un point de mesure, une vitesse et/ou une amplitude d'un déplacement de ce point de mesure.

9. Microscope à balayage selon l'une des revendications précédentes,
**caractérisé en ce**
**que** l'interféromètre est réalisé sous la forme d'un interféromètre hétérodyne (20), dans lequel deux ondes optiques de fréquence différente sont superposées.
